(19) Europäisches Patentamt
European Patent Office
Office européen des brevets

(11) Veröffentlichungsnummer: **0 295 524 B1**

(12) **EUROPÄISCHE PATENTSCHRIFT**

(45) Veröffentlichungstag der Patentschrift:
29.05.91 Patentblatt 91/22

(51) Int. Cl.$^5$: **C09K 11/86**

(21) Anmeldenummer: 88108996.5

(22) Anmeldetag: 06.06.88

(54) Stimulierbarer Speicherleuchtstoff.

(30) Priorität: 15.06.87 DE 3719915

(43) Veröffentlichungstag der Anmeldung:
21.12.88 Patentblatt 88/51

(45) Bekanntmachung des Hinweises auf die Patenterteilung:
29.05.91 Patentblatt 91/22

(84) Benannte Vertragsstaaten:
BE DE FR GB IT NL

(56) Entgegenhaltungen:
EP-A- 0 019 880
EP-A- 0 083 071
EP-A- 0 102 051
EP-A- 0 107 192

(73) Patentinhaber: Siemens Aktiengesellschaft
Wittelsbacherplatz 2
W-8000 München 2 (DE)

(72) Erfinder: Knüpfer, Wolfgang, Dr.
Rudelsweiherstrasse 11
W-8520 Erlangen (DE)
Erfinder: Mengel, Monika, Dr.
Lerchenbühl 9c
W-8520 Erlangen (DE)

**Beschreibung**

Die Erfindung betrifft einen stimulierbaren mit einem oder mehreren Lanthaniden dotierter Bariumfluorhalogenid-Speicherleuchtstoff. Ein derartiger Speicherleuchtstoff ist beispielsweise aus der E-PS 0 022 564 bekannt.

Derartige Speicherleuchtstoffe werden bei Bildaufnahmevorrichtungen verwendet, wie sie beispielsweise in der DE-PS 23 63 995 beschrieben ist. In einer derartigen Röntgendiagnostikeinrichtung wird als strahlenempfindlicher Wandler ein Leuchtschirm aus einem Luminiszenz-Speicherleuchtstoff verwendet, der mit Röntgenstrahlen bestrahlt wird, so daß dieser ein latentes Röntgenstrahlenbild speichert. In einer Auslesevorrichtung wird dieser Speicherleuchtschirm als Vorlage von einer zusätzlichen Strahlenquelle, dies kann beispielsweise ein Laser sein, bildpunktweise zum Leuchten angeregt. Durch die stimulierenden Strahlen emittiert der Speicherleuchtstoff Licht in Abhängigkeit von der in dem Speicherleuchtstoff gespeicherten Energie. Das aufgrund der Stimulation emittierte Licht wird detektiert und sichtbar gemacht, so daß das in dem Speicherleuchtstoff enthaltene Röntgenbild auslesbar ist.

In der obengenannten E-PS 0 022 564 wird als Lichtquelle zur Erzeugung des den Bariumfluorhalogenid-Speicherleuchtstoff stimulierenden monochromatischen Lichtstrahls u.a. die Verwendung eines He-Ne-Lasers vorgeschlagen, der Licht einer Wellenlänge von 633 nm erzeugt. Da der Speicherleuchtstoff aber auch von Licht anderer Wellenlängen stimulierbar ist, ist seine maximale Empfindlichkeit relativ breit ausgelegt.

Die Erfindung geht von der Aufgabe aus, einen stimulierbaren Bariumfluorhalogenid-Speicherleuchtstoff der eingangs genannten Art zu schaffen, der ein Maximum seiner Empfindlichkeit und Stimulierbarkeit im Bereich der roten Wellenlänge des He-Ne-Lasers aufweist.

Die Aufgabe wird erfindungsgemäß dadurch gelöst, daß der Speicherleuchtstoff zusätzlich mindestens ein gebranntes Produkt einer Alkalihydroxid- oder Erdalkalihydroxid-Verbindung enthält und daß ein Speicherleuchtstoff verwendet wird, der eine Zusammensetzung mit folgender Summenformel aufweist, die lautet :

$$(Ba_{1-z} Me_z) FX * xA : y La^{2+},$$

wobei Me wenigstens ein Element ist, das aus der Gruppe ausgewählt ist, die aus Mg, Ca, Sr, Zn und Cd besteht, X mindestens ein Halogen ist, das aus der Gruppe ausgewählt ist, die aus Cl, Br und I besteht, A mindestens ein gebranntes Produkt einer Alkalihydroxid- oder Erdalkalihydroxid-Verbindung ist, La wenigstens ein Element ist, das aus der Gruppe ausgewählt ist, die aus Eu, Tb, Ce, Tm und Yb besteht und worin z, x und y Zahlen sind, die die Bedingungen erfüllen :

$$0 \leqq z \leqq 0,2, 0 < x \leqq 0,1 \text{ und } 0 < y \leqq 0,1.$$

Durch diesen Aufbau wird eine wesentliche Steigerung der Empfindlichkeit des Leuchtstoffes im Bereich der Wellenlänge des Helium-Neon-Lasers erzielt.

Dabei haben sich die besten Werte bei einem Leuchtstoff ergeben, bei welchem sich gemäß obengenannter Summenformel eine Zusammensetzung ergibt, die lautet :

$(Ba_{1-a-b} Mg_a Ca_b) FX * xA : y Eu^{2+}$, wobei X mindestens ein Halogen ist, das aus der Gruppe ausgewählt ist, die aus Cl, Br und I besteht, A mindestens ein gebranntes Produkt einer Alkalihydroxid- oder Erdalkalihydroxid-Verbindung ist, und worin a, b, x und y Zahlen sind, die die Bedingungen erfüllen :

$$0 \leqq a \leqq 0,1, 0 \leqq b \leqq 0,1, 0 < x \leqq 0,1 \text{ und } 0 < y \leqq 0,1.$$

Die größte Empfindlichkeit weist der Speicherleuchtstoff aus, wenn die Alkalihydroxid- oder Erdalkalihydroxid-Verbindung aus Barium-Hydroxid (Ba(OH)$_2$) besteht. Vorteilhaft läßt sich dieser Speicherleuchtstoff in der Leuchtschicht einer Bildspeicherplatte verwenden. Zweckmäßigerweise wird der Speicherleuchtstoff in zwei aufeinanderfolgenden Glühprozessen in laminar strömender reduzierender Atmosphäre hergestellt. Es hat sich dabei als vorteilhaft erwiesen, wenn vor dem zweiten Glühprozess ein Flußmittelzusatz aus Alkali- oder Erdalkalihydroxiden dem Speicherleuchtstoff zugegeben wird.

Die Erfindung ist nachfolgend anhand von in den Figuren dargestellten Ausführungsbeispielen näher erläutert. Es zeigen :

Fig. 1 eine bekannte Röntgendiagnostikeinrichtung zum Einsatz des mit dem erfindungsgemäßen Leuchtstoff beschichteten Speicherleuchtschirms,

Fig. 2 schematisch die Durchführung des Herstellungsverfahrens und

Fig. 3 Kurvenverläufe zur Darstellung der Steigerung der Empfindlichkeit des erfindungsgemäßen Leuchtstoffes.

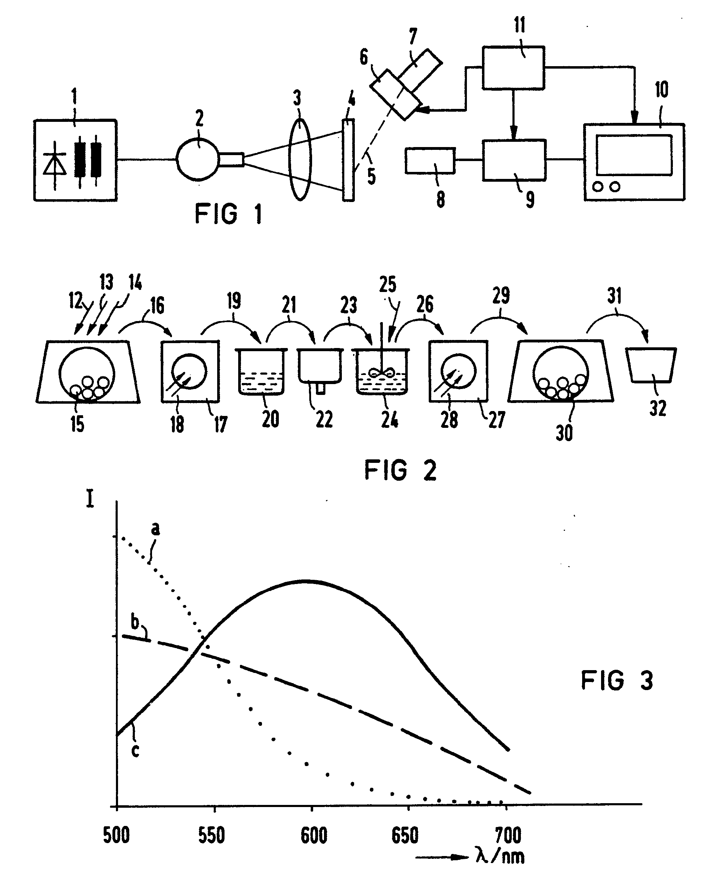

In der Fig. 1 ist eine Röntgendiagnostikeinrichtung für den Einsatz eines erfindungsgemäßen Leuchtstoffes dargestellt, die einen Hochspannungsgenerator 1 aufweist, der eine Röntgenröhre 2 speist, die Röntgenstrahlen aussendet, die einen Patienten 3 durchdringen. Auf einem Lumineszenz-Speicherleuchtschirm 4, der den erfindungsgemäßen Leuchtstoff enthält, fallen die Röntgenstrahlen, die durch den Patienten 3 entsprechend seiner Transparenz geschwächt wurden. Dieses auffallende Strahlenbild erzeugt in dem Speicherleuchtschirm 4 Defektelektronen, die in einer Potentialfalle des Leuchtstoffes gespeichert werden, so daß in dem Speicherleuchtschirm 4 ein latentes Bild gespeichert ist.

Zur Wiedergabe des latenten Bildes wird der Speicherleuchtschirm 4 von einem Laserstrahl 5 bildpunktweise abgetastet, der von einem Laser 7, beispielsweise einem He-Ne-Laser, erzeugt und von der Ablenkvorrichtung 6 über die Fläche des Leuchtschirmes 4 zeilenweise abgelenkt wird. Die Ablenkvorrichtung 6 für den Laser 7 kann beispielsweise aus einem Ablenkspiegel für die vertikale und einem elektrooptischen Strahlenablenker für die horizontale Ablenkung bestehen. Die vertikale Ablenkung kann aber auch durch Parallel-Vorschub des Leuchtschirmes 4 senkrecht zur Abtastzeile erreicht werden. Durch die Abtastung mit dem Laserstrahl 5 werden alle auf dem Speicherleuchtschirm 4 liegenden Bildpunkte zeilenweise nacheinander angeregt und zum Leuchten gebracht. Ein Detektor 8 erfaßt das vom Speicherleuchtschirm 4 emittierte Licht und wandelt die Helligkeit der abgetasteten Bildpunkte in ein elektrisches Signal um, das einer Wiedergabeschaltung 9 zugeführt wird, die aus den einzelnen analogen Ausgangssignalen des Detektors 8 ein Videosignal zur Darstellung auf einem Monitor 10 erzeugt. Die Wiedergabeschaltung 9 kann Bildspeicher, Verarbeitungsschaltungen und Wandler enthalten. Eine Steuereinrichtung 11 erzeugt die Steuertakte zur Synchronisation der Ablenkvorrichtung 6, der Wiedergabeschaltung 9 und des Monitors 10.

Der Leuchtstoff kann in üblicher Weise hergestellt werden, in dem gemäß der gewünschten Zusammensetzung abgewogene Barium-, Magnesium- und Calciumhalogenide als Ausgangsverbindungen genommen werden (Pfeil 12), wobei das eigentliche Wirtsgitter durch die Zumischung (Pfeil 13) von Bariumfluorid ($BaF_2$) zu Bariumbromid ($BaBr_2$) bzw. Bariumchlorid ($BaCl_2$) oder Bariumjodid ($BaI_2$) im Molverhältnis 1 : 1,1 bis 1 : 1,3 realisiert wird. Dieses Produkt wird unter Zusatz (Pfeil 14) von Boroxid ($B_2O_3$) oder Ammoniumhalogeniden als Flußmittel für den ersten Glühprozess mit 0,01 bis 0,1 Gewichtsprozent und Europiumoxid ($Eu_2O_3$) mit 0,01 bis 0,5 Gewichtsprozent als Aktivator in einer Kugelmühle 15 in einer Zeit von 8 bis 20 Stunden gemahlen. Die se gemahlene Mischung wird, wie durch Pfeil 16 angedeutet, in einen Rohrofen 17 überführt und bei einer Temperatur von 700°C bis 1000°C bei einer Glühzeit von 1 bis 3 Stunden unter einer laminar strömenden, reduzierenden Atmosphäre 18 geglüht. Die Atmosphäre kann beispielsweise eine $N_2$-$H_2$-Atmosphäre mit einem $N_2$ : $H_2$-Verhältnis zwischen 9 und 90 sein. Sie weist eine Durchflußgeschwindigkeit von 40 bis 200 l pro Stunde auf.

Nach Abkühlung des Leuchtstoffes wird der Leuchtstoff, wie durch Pfeil 19 angedeutet, in ein Becherglas 20 überführt und zu einer Suspension in einer Methanol-Wasser-Mischung versetzt. Nach Überführung (Pfeil 21) des Leuchtstoffes in eine Filtriervorrichtung 22 wird dieser gefiltert und getrocknet. Danach wird er gemäß Pfeil 23 in ein Becherglas 24 überführt, in dem der Leuchtstoff mit einem Flußmittel aus der Reihe der Alkali- oder Erdalkalihydroxide, vorzugsweise Bariumhydroxid (Ba $(OH)_2$ * $8H_2O$) mit 0,001 bis 0,01 Gewichtsprozent versetzt (Pfeil 25) und vermischt wird. Anschließend wird der Leuchtstoff wie durch Pfeil 26 angedeutet in einen Rohrofen 27 überführt und ein zweites Mal bei 500°C bis 800°C mit einer Glühzeit von 2 bis 4 Stunden ebenfalls in einer laminar strömenden reduzierenden Atmosphäre 28 geglüht. Daraufhin kann gemäß der Andeutung durch einen Pfeil 29 der Glühkuchen in einer Mühle 30 gebrochen und schließlich, wie durch den weiteren Pfeil 31 angedeutet, in ein Sieb 32 gebracht werden. Der so erhaltene Leuchtstoff wird zur Prüfung in bekannter Weise zu einem Leuchtschirm verarbeitet.

In der Fig. 3 ist die relative Intensität von Stimulationsspektren von derart hergestellten Leuchtstoffen in Abhängigkeit von der Wellenlänge $\lambda$ der Anregungsstrahlen dargestellt. Die Kurve a gibt dabei das Stimulationsspektrum des Leuchtstoffes nach dem ersten Glühprozess an. Die Kurve b kennzeichnet das Stimulationsspektrum nach dem zweiten Glühprozess, der zur Darstellung der erfindungsgemäßen Verbesserung des Leuchtstoffes und zur besseren Gegenüberstellung ohne Flußmittel durchgeführt wurde. Die Kurve c gibt das Stimulationsspektrum nach dem zweiten Glühprozess an, der wie beschrieben mit einem Flußmittel durchgeführt wurde. Hieraus ist klar ersichtlich, daß durch die Zugabe des Flußmittels vor dem zweiten Glühprozess die Empfindlichkeit des erfindungsgemäßen Leuchtstoffes bei einer Wellenlänge von etwa 610 nm ein Maximum aufweist. Das bedeutet aber, daß bei der Verwendung eines He-Ne-Lasers, der Licht einer Wellenlänge von 633 nm erzeugt, die Empfindlichkeit immer noch auf einem relativ hohen Wert liegt, so daß der Leuchtstoff vorteilhaft mit einem derartigen Laser stimulierbar ist. Durch die Flußmittelunterstützung während des zweiten Glühprozesses ergbab sich die aus der Fig. 3 ersichtliche Rotverschiebung des Maximum des Stimulationsspektrums, so daß dieser Leuchtstoff gezielt an die Frequenz des He-Ne-Lasers angepaßt werden kann.

## Ansprüche

1. Stimulierbarer mit einem oder mehreren Lanthaniden dotierter Bariumfluorhalogenid-Speicherleuchtstoff, **dadurch gekennzeichnet**, daß der Speicherleuchtstoff zusätzlich mindestens ein gebranntes Produkt einer Alkalihydroxid- oder Erdalkalihydroxid-Verbindung enthält und daß die Summenformel $(Ba_{1-z} Me_z) FX * xA : y La^{2+}$ ist, wobei Me

wenigstens ein Element ist, das aus der Gruppe ausgewählt ist, die aus Mg, Ca, Sr, Zn und Cd besteht, X mindestens ein Halogen ist, das aus der Gruppe ausgewählt ist, die aus Cl, Br und I besteht, A mindestens ein gebranntes Produkt einer Alkalihydroxid- oder Erdalkalihydroxid-Verbindung ist, La wenigstens ein Element ist, das aus der Gruppe ausgewählt ist, die aus Eu, Tb, Ce, Tm und Yb besteht und worin z, x und y Zahlen sind, die die Bedingungen erfüllen :

$$0 \leqq z \leqq 0{,}2, 0 < x \leqq 0{,}1 \text{ und } 0 < y \leqq 0{,}1.$$

2. Speicherleuchtstoff nach Anspruch 1, **dadurch gekennzeichnet,** daß die Summenformel $(Ba_{1-a-b} Mg_a Ca_b) FX * xA : y Eu^{2+}$ ist, wobei X mindestens ein Halogen ist, das aus der Gruppe ausgewählt ist, die aus Cl, Br und I besteht, A mindestens ein gebranntes Produkt einer Alkalihydroxid- oder Erdalkalihydroxid-Verbindung ist, und worin a, b, x und y Zahlen sind, die die Bedingungen erfüllen :

$$0 \leqq a \leqq 0{,}1, 0 \leqq b \leqq 0{,}1 \ 0 < x \leqq 0{,}1 \text{ und } 0 < y \leqq 0{,}1.$$

3. Speicherleuchtstoff nach Anspruch 1 oder 2, **dadurch gekennzeichnet,** daß die Alkalihydroxid- oder Erdalkalihydroxid-Verbindung aus Barium-Hydroxid $(Ba (OH)_2)$ besteht.

4. Verwendung des Speicherleuchtstoffes nach einem der Ansprüche 1 bis 3 in der Leuchtschicht einer Bildspeicherplatte.

5. Verfahren zur Herstellung eines Speicherleuchtstoffes nach einem der Ansprüche 1 bis 3, **dadurch gekennzeichnet,** daß der Speicherleuchtstoff in zwei aufeinanderfolgenden Glühprozessen in laminar strömender reduzierender Atmosphäre hergestellt wird.

6. Verfahren nach Anspruch 5, **dadurch gekennzeichnet,** daß vor dem zweiten Glühprozess ein Flußmittelzusatz aus Alkali- oder Erdalkalihydroxiden dem Speicherleuchtstoff zugegeben wird.

## Claims

1. Stimulable barium fluorohalide storage phosphorescent substance doped with one or several lanthanides, characterised in that the storage phosphorescent substance additionally contains at least one calcined product of an alkali hydroxide compound or alkaline earth hydroxide compound and in that the empirical formula is $(Ba_{1-z} Me_z) FX * xA : y La^{2+}$ where Me is at least one element selected from the group consisting of Mg, Ca, Sr, Zn and Cd, X is at least one halogen selected from the group consisting of Cl, Br and I, A is at least one calcined product of an alkali hydroxide compound or alkaline earth hydroxide compound, La is at least one element selected from the group consisting of Eu, Tb, Ce, Tm and Yb and where z, x and y are numbers which meet the conditions :

$$0 \leq z \leq 0.2, 0 < x \leq 0.1 \text{ and } 0 < y \leq 0.1.$$

2. Storage phosphorescent substance according to claim 1, characterised in that the empirical formula is $(Ba_{1-a-b} Mg_a Ca_b) FX * xA : y Eu^{2+}$, where X is at least one halogen selected from the group consisting of Cl, Br and I, A is at least one calcined product of an alkali hydroxide compound or alkaline earth hydroxide compound and where a, b, x and y are numbers which meet the conditions $0 \leq a \leq 0.1, 0 \leq b \leq 0.1, 0 < x \leq 0.1.$ and $0 < y \leq 0.1.$

3. Storage phosphorescent substance according to claim 1 or 2, characterised in that the alkali hydroxide compound or alkaline earth hydroxide compound consists of barium hydroxide $(Ba (OH)_2)$.

4. Use of the storage phosphorescent substance according to one of the claims 1 to 3 in the phosphorescent layer of an image storage plate.

5. Method for producing a storage phosphorescent substance according to one of the claims 1 to 3, characterised in that the storage phosphorescent substance is produced in two successive annealing processes in a laminarly flowing, reducing atmosphere.

6. Method according to claim 5, characterised in that before the second annealing process a fluxing agent additive of alkali hydroxides or alkaline earth hydroxides is added to the storage phosphorescent substance.

## Revendications

1. Substance luminescente stimulable d'enregistrement formée d'un fluorohalogénure de baryum dopé par un ou plusieurs lanthanides, caractérisée par le fait que la substance luminescente d'enregistrement contient en outre au moins un produit calciné formé d'un composé d'un hydroxyde de métal alcalin ou d'un hydroxyde de métal alcalino-terreux et que la formule brute est $(Ba_{1-z} Me_z) FX * A : y La^{2+}$, Me étant au moins un élément choisi dans le groupe incluant Mg, Ca, Sr, Zn et Cd, et X au moins un halogène choisi dans le groupe incluant Cl, Br et I, et A au moins un produit calciné formé d'un composé constitué par un hydroxyde de métal alcalin ou un hydroxyde de métal alcalino-terreux, et La au moins un élément choisi dans le groupe incluant Eu, Tb, Ce, Tm et Yb, et z, x et y étant des nombres satisfaisant aux conditions :

$$0 \leq z \leq 0{,}2, 0 < x \leq 0{,}1 \text{ et } 0 < y \leq 0{,}1.$$

2. Substance luminescente d'enregistrement suivant la revendication 1, caractérisé par le fait que la formule brute est $(Ba_{1-a-b} Mg_a Ca_b) FX * xA : y Eu^{2+}$, X

étant au moins un halogène choisi dans le groupe incluant Cl, Br et I, et A au moins un produit calciné d'un composé formé d'un hydroxyde de métal alcalin ou d'un hydroxyde de métal alcalino-terreux, et a, b, x et y étant des nombres satisfaisant aux conditions :

$0 \leq a \leq 0,1$, $0 \leq b \leq 0,1$, $0 < x \leq 0,1$ et $0 < y \leq 0,1$.

3. Substance luminescente d'enregistrement suivant la revendication 1 ou 2, caractérisée par le fait que le composé formé d'un hydroxyde de métal alcalin ou d'un hydroxyde de métal alcalino-terreux est constitué par de l'hydroxyde de baryum (Ba $(OH)_2$).

4. Utilisation de la substance luminescente d'enregistrement suivant l'une des revendications 1 à 3 dans la couche luminescente d'une plaque de mémorisation d'images.

5. Procédé pour fabriquer une substance luminescente d'enregistrement suivant l'une des revendications 1 à 3, caractérisé par le fait que la substance luminescente d'enregistrement est réalisée en deux étapes successives calcination de recuit dans une atmosphère réductrice à écoulement laminaire.

6. Procédé suivant la revendication 5, caractérisé par le fait qu'avant la seconde étape de calcination, un additif formant flux et constitué par des hydroxydes de métal alcalin ou de métal alcalino-terreux est ajouté à la substance luminescente d'enregistrement.

EP 0 295 524 B1

FIG 1

FIG 2

FIG 3

6